# EUROPEAN PATENT SPECIFICATION

(11) **EP 1 595 759 B1**
(45) Date of publication and mention of the grant of the patent: **01.10.2008**
(21) Application number: 05010009.8
(22) Date of filing: 09.05.2005
(51) Int. Cl.: B60R 22/34, B60R 22/44, B60R 22/02

(54) **A winding control method in a seat belt retractor and a seat belt device**
Verfahren zur Steuerung eines Sicherheitsgurtaufrollers und ein Sicherheitsgurtaufroller
Procédé pour contrôler un enrouleur de ceinture de sécurité et un enrouleur de ceinture de sécurité

(30) Priority: 13.05.2004 JP 2004143179
(43) Date of publication of application: 16.11.2005
(73) Proprietor: TAKATA CORPORATION, Minato-ku, Tokyo 106-8510 (JP)
(72) Inventor: Tanaka, Koji c/o Takata Corporation, Tokyo 106-8510 (JP); Takao, Masato c/o Takata Corporation, Tokyo 106-8510 (JP); Inuzuka, Koji c/o Takata Corporation, Tokyo 106-8510 (JP)
(74) Representative: Banzer, Hans-Jörg

(56) References cited:
- EP-A- 0 893 313
- EP-A- 1 243 486
- DE-A1- 4 314 176
- US-A- 4 669 680
- US-B1- 6 213 512
- PATENT ABSTRACTS OF JAPAN vol. 2000, no. 25, 12 April 2001 (2001-04-12) & JP 2001 225720 A (TAKATA CORP), 21 August 2001 (2001-08-21)
- PATENT ABSTRACTS OF JAPAN vol. 015, no. 101 (M-1091), 11 March 1991 (1991-03-11) & JP 03 000552 A (TAKATA KK), 7 January 1991 (1991-01-07)

## Description

The present invention relates to a winding control method in a seat belt retractor having a function of conducting an operation of winding up a seat belt by means of a motor and to a seat belt device.

### [Background of the Invention]

A seat belt retractor is required to satisfy both the followings:
(1) to securely wind up an excessively withdrawn seat belt until the seat belt fits an occupant's body, or to wind up the withdrawn seat belt until the seat belt is securely housed in a housing, and
(2) not to impart unnecessary tightness in chest or the like of an occupant normally wearing the seat belt.
In case of a seat belt retractor utilizing a biasing force of a single return spring, however, when a spring having a weak biasing force is employed as the return spring in order to reduce the pressure to the chest of the occupant during wearing, the biasing force for winding up the belt (for housing the belt) must be poor so that the operationality and the retractility are deteriorated. On the other hand, when a spring having a strong biasing force is employed as the return spring in order to provide sufficient biasing force for winding up the seat belt, there is a problem of increased tightness in chest of an occupant even when normally wearing the belt.

For solving the aforementioned problems, inventions of a seat belt retractor which can wind up a seat belt by a motor in addition to the biasing force of a return spring have been proposed, for example, in Japanese Patent Unexamined Publication No. H03-552 and Japanese Patent Unexamined Publication No. 2001-225720.

Accordingly, the following items must be considered for using a motor for winding up a seat belt:
(1) Power supply to the motor should be cut off (to stop the winding action) when the winding of the full amount of seat belt is completed. If not taking such measures, electric power of a buttery is consumed in vain to supply unnecessary current to the motor and the use of a motor which never overheats even when high current flows for a long time period is required.
(2) Power supply to the motor should be cut off (to stop the winding action) when the seat belt is caught by something or the occupant takes an action of withdrawing the seat belt during the winding of the seat belt. If not taking such measures, electric power of a buttery is consumed in vain to supply unnecessary current to the motor and the withdrawing action by the occupant must encounter strong resistance force, thus making the occupant to feel unconformable.

For preventing emergence of such problems, a conventional winding control device of a seat belt carries out the following control. That is, current flowing through a motor is detected. When a value of the detected current exceeds a predetermined value, it is determined that the present state is either of the aforementioned states (1) and (2) and power supply to the motor is cut off (to stop the winding action).

### [Problems to be solved by the Invention]

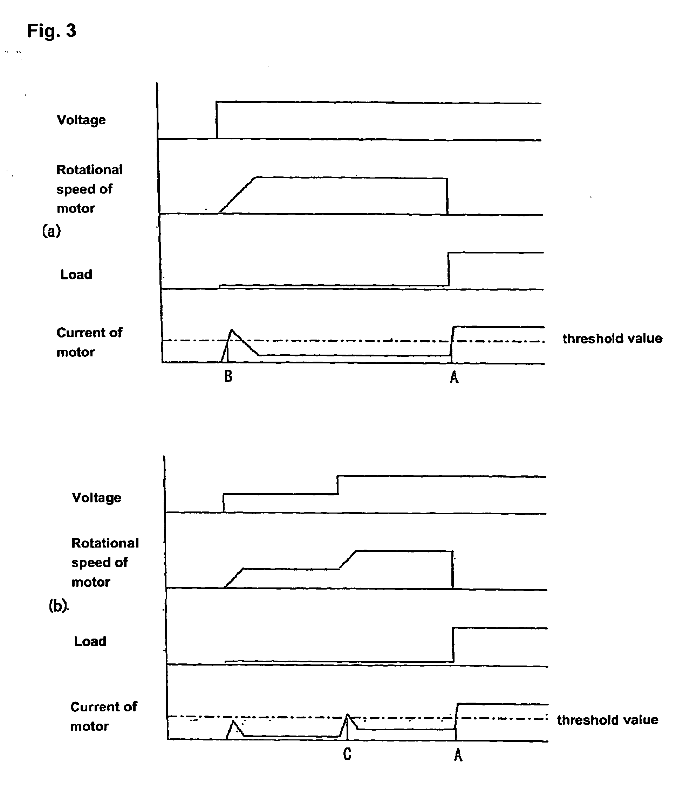

However, the winding control method of the motor as mentioned above has the following problems. Just after a command to wind up is outputted to the motor or when such a control as to stepwise increase the winding-up speed is conducted, generally accelerating current flows into the motor. Figs. 3(a), 3(b) show such conditions.

Fig. 3(a) shows a case of conducting a normal winding control. The winding of the seat belt is started in a state that a constant voltage is applied to the motor. In a state that the full amount of seat belt is wound or the like, the motor is stopped as mentioned above. Since the current of the motor exceeds a threshold value at a point "A" where the current of the motor is rapidly increased, it is designed to make the voltage applied to the motor to zero at the point A (Fig. 3(a) shows a state that the voltage is maintained without variation for convenience of explanation).

Since accelerating current flows into the motor when the motor is accelerated just after a voltage is applied to the motor, however, the value of detected current at a point B exceeds the threshold value. Therefore, there is a problem that the control device makes the voltage applied to the motor to zero also at the point B.

That is, in Fig. 3(a), though the point of making the voltage applied to the motor to zero essentially must be the point A where the current flowing through the motor exceeds the threshold value because the load is increased by the completion of winding of the full amount of seat belt, the seat belt withdrawing action by an occupant, or the like. However, since the current at the start of the motor exceeds the threshold value at the point B, the voltage applied to the motor is made to zero at the point B so as to stop the motor.

In Fig. 3(b), since the rotational speed of the motor is varied stepwise, the accelerating current at the start of the motor never exceeds the threshold value. However, since accelerating current of the second acceleration is overlapped with the load current for winding up the seat belt, the value of the current including the accelerating current exceeds the threshold value at a point C, the voltage applied to the motor is made to zero at the point C so as to stop the motor.

In US 4,669,680 a method according to the preamble of any one of claims 1-3 is disclosed.

The present invention was made under the circumstances and the object of the present invention is to provide a winding control method in a seat belt retractor capable of preventing a motor from being stopped before reaching a predetermined load due to effects of the accelerating current of the motor and to provide a seat belt device capable of exhibiting such effect.

According to the invention, this object is achieved by a winding control method as defined in claim 1, 2 or 3 and a seat belt device as defined in claim 4.

The first means for achieving the aforementioned object is a winding control method in a seat belt retractor having a function of conducting an operation of winding up a seat belt by means of a motor, including detecting current flowing through said motor, and stopping the winding action when a value of the detected current exceeds a predetermined value, wherein the winding action is not stopped during said motor is accelerated even when the value of the detected current exceeds said predetermined value.

According to the aforementioned means, since the winding action is not stopped during the motor is accelerated even when the value of the detected current exceeds the predetermined value, it is possible to prevent the motor from being stopped before reaching a predetermined load due to effects of the accelerating current of the motor. The period corresponding to "during the motor is accelerated" may be determined by actually detecting acceleration of the motor by using a tacho generator or a pulse encoder attached to the motor. When experience shows the time period of acceleration, the period may be set as a time period from when a command to start acceleration is outputted to when the acceleration of the motor is completed. Work and effect can be fully obtained also by this setting.

The second means for achieving the aforementioned object is a winding control method in a seat belt retractor having a function of conducting an operation of winding up a seat belt by means of a motor, including detecting current flowing through said motor, and stopping the winding action when a value of the detected current exceeds a predetermined value, wherein the winding action is not stopped until a predetermined time period elapses from when the voltage applied to said motor is increased even when the value of the detected current exceeds said predetermined value.

Generally in seat belt retractors, the rotational speed of the motor is not directly controlled and the rotational speed of the motor is varied indirectly by controlling voltage applied to the motor. In this case, the accelerating current is proportional to the difference between the applied voltage and counterelectromotive force of the motor, while the counterelectromotive force of the motor is proportional to the rotational speed of the motor. Therefore, the accelerating current is the highest at the moment of variation in the applied voltage and decreases as the rotational speed of the motor is increased.

This means was made by focusing the aforementioned characteristics. That is, the winding action is not stopped only in a time period in which the accelerating current is high even when the value of the detected current exceeds said predetermined value. According to experiments or calculation, it can be determined how long the time period in which the accelerating current is.

The third means for achieving the aforementioned object is a winding control method in a seat belt retractor having a function of conducting an operation of winding up a seat belt by means of a motor, including detecting current flowing through said motor, and stopping the winding action when a value of the detected current exceeds a predetermined value, wherein the acceleration of said motor is limited in such a range that the value of current flowing through said motor never exceeds said predetermined value.

According to the aforementioned means, since the acceleration of the motor is limited in such a range that the value of current flowing through the motor never exceeds the predetermined value, it is possible to prevent the motor from being stopped before reaching a predetermined load due to effects of the accelerating current of the motor. The "acceleration of the motor" includes not only the rate of change in rotational speed but also the degree of increase when a command to stepwise increase the rotational speed of the motor is outputted or when the voltage applied to the motor is stepwise increased.

The fourth means for achieving the aforementioned object is a seat belt device comprising a seat belt retractor, said seat belt retractor having a motor for winding up a seat belt and a winding control, said winding control being adapted to control an operation of winding up said seat belt by means of said motor as described above as first means through third means.

This means can exhibit works and effects obtained by the first means through the third means mentioned above.

The present invention can provide a winding control method in a seat belt retractor capable of preventing a motor from being stopped before reaching a predetermined load due to effects of the accelerating current of the motor and provide a seat belt device capable of exhibiting such effect.
Figs. 1 (a) and 1 (b) are charts for explaining a winding control method in a seat belt retractor as a first embodiment of the present invention.
Fig. 2 is a chart for explaining a winding control method in a seat belt retractor as a second embodiment of the present invention.
Figs. 3(a) and 3(b) are charts for explaining problems of a conventional winding control method of a seat belt.

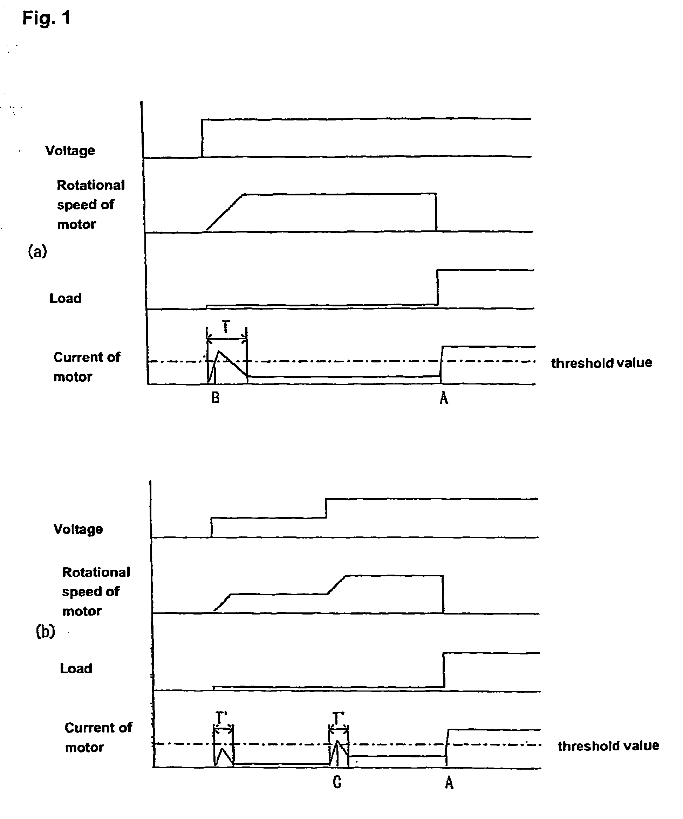

Hereinafter, embodiments of the present invention will be described with reference to the attached drawings. Figs. 1(a), 1(b) are charts, corresponding to Figs. 3(a), 3(b), for explaining a winding control method in a seat belt retractor as a first embodiment of the present invention.

That is, Fig. 1(a) shows a case of normal winding control. The winding of a seat belt is started in a state that a constant voltage is applied to a motor. In a state that the full amount of seat belt is wound or the like, the motor is stopped as mentioned above. Since the current of the motor exceeds a threshold value at a point "A" where the current of the motor is rapidly increased, it is designed to make the voltage applied to the motor to zero at the point A (Fig. 1(a) shows a state that the voltage is maintained without variation for convenience of explanation).

Since accelerating current flows into the motor when the motor is accelerated just after a voltage is applied to the motor, however, the value of detected current at a point B exceeds the threshold value. Therefore, there is a problem that the voltage applied to the motor is made to zero also at the point B.

That is, in Fig. 1(a), though the point of making the voltage applied to the motor to zero essentially must be the point A where the current flowing through the motor exceeds the threshold value because the load is increased by the completion of winding of the full amount of seat belt, the seat belt withdrawing action by an occupant, or the like. However, since the current at the start of the motor exceeds the threshold value at the point B, the voltage applied to the motor is made to zero at the point B so as to stop the motor.

In this embodiment, determination of whether or not the current of the motor exceeds the threshold value is halted during the motor is accelerated, i.e. from when a command to wind up is outputted to the motor to when a time period T which is predetermined by previous measurement elapses. Therefore, the determination of whether or not the current of the motor exceeds the threshold value is not made at the point B where the current of the motor exceeds the threshold value due to effects of the accelerating current, thereby preventing the motor from being stopped. The motor is stopped at the point A where the load actually grows.

The same is true for the case of Fig. 1(b). The determination of whether or not the current of the motor exceeds the threshold value is halted every time an acceleration command is outputted to the motor, i.e. every time the voltage increases, from when the command is outputted to when a time period T' which is predetermined by previous measurement elapses. Therefore, the determination of whether or not the current of the motor exceeds the threshold value is not made at a point C where the current of the motor exceeds the threshold value due to effects of the accelerating current, thereby preventing the motor from being stopped. The motor is stopped at the point A where the load actually grows.

When the degree of acceleration differs between the first time and the second time, the time period of halting may be changed according to the degree. Normally, the time period of halting set to the maximum accelerating time can be enough for the respective accelerations.

Though the time period T, T' is set to the time period from the start to the finish of acceleration of the motor in the above explanation, the time period T, T' may be set to the time period during a peak of the accelerating current because the accelerating current is the highest at the moment of variation in the applied voltage and, after that, is reduced according to the increase in rotational speed of the motor. Accordingly, the time period can be set to be shorter than the time period from the start to the finish of acceleration of the motor.

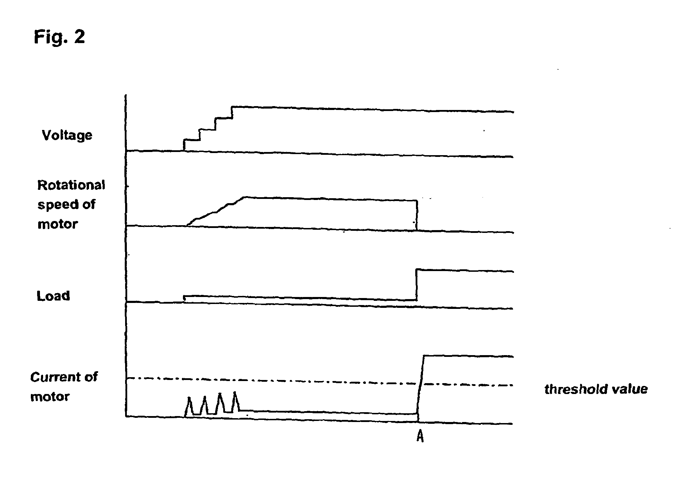

Fig. 2 is a chart for explaining a winding control method in a seat belt retractor as a second embodiment of the present invention. In this embodiment, for accelerating a motor (at the start of the motor in Fig. 2), a command for rotational speed of the motor is not increased to a target value at once (that is, the voltage applied to the motor is not increased to a target value at once) and is increased stepwise. Therefore, reduced accelerating current flows into the motor so that the current never exceeds the threshold value. Accordingly, the motor is prevented from being stopped due to effects of the accelerating current. The motor is stopped at the point A where the load actually grows.

## Claims

1. A winding control method in a seat belt retractor having a function of conducting an operation of winding up a seat belt by means of a motor, including detecting current flowing through said motor, and stopping the winding action when a value of the detected current exceeds a predetermined value,
**characterized in that**
the winding action is not stopped during said motor is accelerated even when the value of the detected current exceeds said predetermined value.

2. A winding control method in a seat belt retractor having a function of conducting an operation of winding up a seat belt by means of a motor, including detecting current flowing through said motor, and stopping the winding action when a value of the detected current exceeds a predetermined value,
**characterized in that**
the winding action is not stopped until a predetermined time period elapses from when the voltage applied to said motor is increased even when the value of the detected current exceeds said predetermined value.

3. A winding control method in a seat belt retractor having a function of conducting an operation of winding up a seat belt by means of a motor, including detecting current flowing through said motor, and stopping the winding action when a value of the detected current exceeds a predetermined value,
**characterized in that**
the acceleration of said motor is limited in such a range that the value of current flowing through said motor never exceeds said predetermined value.

4. A seat belt device comprising a seat belt retractor,
said seat belt retractor having a motor for winding up a seat belt and
a winding control,
said winding control being adapted to control an operation of winding up said seat belt by means of said motor according to any one of claims 1-3.

## Patentansprüche

1. Aufwickelsteuerungsverfahren in einem Sicherheitsgurtaufwickler, welches die Funktion aufweist, einen Vorgang des Aufwickelns eines Sicherheitsgurtes mittels eines Motors durchzuführen, umfassend das Detektieren eines durch den Motor fließenden Stroms und ein Anhalten des Aufwickelvorgangs, wenn ein Wert des detektierten Stroms einen vorgegebenen Wert übersteigt,
**dadurch gekennzeichnet,**
**dass** der Vorgang des Aufwickelns nicht angehalten wird, während der Motor beschleunigt wird, selbst wenn der Wert des detektierten Stroms den vorgegebenen Wert übersteigt.

2. Aufwickelsteuerungsverfahren in einem Sicherheitsgurtaufwickler, welches die Funktion aufweist, einen Vorgang des Aufwickelns eines Sicherheitsgurtes mittels eines Motors durchzuführen, umfassend das Detektieren eines durch den Motor fließenden Stroms und ein Anhalten des Aufwickelvorgangs, wenn ein Wert des detektierten Stroms einen vorgegebenen Wert übersteigt,
**dadurch gekennzeichnet,**
**dass** der Vorgang des Aufwickelns nicht angehalten wird, bis eine vorgegebene Zeitspanne von dem Vergrößern einer an den Motor angelegten Spannung verstrichen ist, selbst wenn der Wert des detektierten Stroms den vorgegebenen Wert übersteigt.

3. Aufwickelsteuerungsverfahren in einem Sicherheitsgurtaufwickler, welches die Funktion aufweist, einen Vorgang des Aufwickelns eines Sicherheitsgurtes mittels eines Motors durchzuführen, umfassend das Detektieren eines durch den Motor fließenden Stroms und ein Anhalten des Aufwickelvorgangs, wenn ein Wert des detektierten Stroms einen vorgegebenen Wert übersteigt,
**dadurch gekennzeichnet,**
**dass** die Beschleunigung des Motors in einem derartigen Bereich begrenzt ist, dass der Wert des durch den Motor fließenden Stroms den vorgegebenen Wert nie übersteigt.

4. Sicherheitsgurtvorrichtung umfassend einen Sicherheitsgurtaufwickler,
wobei der Sicherheitsgurtaufwickler einen Motor zum Aufwickeln eines Sicherheitsgurtes und eine Aufwicklungssteuerung umfasst,
wobei die Aufwicklungssteuerung ausgestaltet ist, einen Vorgang des Aufwickelns des Sicherheitsgurtes mittels des Motors gemäß einem der Ansprüche 1-3 zu steuern.

## Revendications

1. Procédé de commande d'enroulement dans un rétracteur de ceinture de sécurité ayant une fonction de réalisation d'une opération d'enroulement d'une ceinture de sécurité au moyen d'un moteur, comprenant la détection du courant circulant à travers ledit moteur et l'arrêt de l'action d'enroulement lorsqu'une valeur du courant détecté dépasse une valeur prédéterminée,
**caractérisé en ce que** l'action d'enroulement n'est pas arrêtée pendant que ledit moteur est accéléré même lorsque la valeur du courant détecté dépasse ladite valeur prédéterminée.

2. Procédé de commande d'enroulement dans un rétracteur de ceinture de sécurité ayant une fonction de réalisation d'une opération d'enroulement d'une ceinture de sécurité au moyen d'un moteur, comprenant la détection du courant circulant à travers ledit moteur, et l'arrêt de l'action d'enroulement lorsqu'une valeur du courant détecté dépasse une valeur prédéterminée,
**caractérisé en ce que** l'action d'enroulement n'est pas arrêtée jusqu'à ce qu'une période de temps prédéterminée s'écoule depuis le moment où la tension appliquée audit moteur est accrue même lorsque la valeur du courant détecté dépasse ladite valeur prédéterminée.

3. Procédé de commande d'enroulement dans un rétracteur de ceinture de sécurité ayant une fonction de réalisation d'une opération d'enroulement d'une ceinture de sécurité au moyen d'un moteur, comprenant la détection du courant circulant à travers ledit moteur, et l'arrêt de l'action d'enroulement lorsqu'une valeur du courant détecté dépasse une valeur prédéterminée,
**caractérisé en ce que** l'accélération dudit moteur est limitée dans une plage telle que la valeur du courant circulant à travers ledit moteur ne dépasse jamais ladite valeur prédéterminée.

4. Dispositif de ceinture de sécurité comprenant un rétracteur de ceinture de sécurité,
ledit rétracteur de ceinture de sécurité ayant un moteur pour enrouler une ceinture de sécurité et une commande d'enroulement,
ladite commande d'enroulement étant adapté à commander une opération d'enroulement de ladite ceinture de sécurité au moyen dudit moteur selon l'une quelconque des revendications 1 à 3.
